# EUROPEAN PATENT SPECIFICATION

(11) **EP 0 415 517 B1**
(45) Date of publication and mention of the grant of the patent: **18.08.1993**
(21) Application number: 90306406.1
(22) Date of filing: 12.06.1990
(51) Int. Cl.: B29C 67/14

(54) **Process and apparatus for impregnating continuous fibre bundle**
Verfahren und Apparat zum Imprägnieren von Endlos-Faserbündeln
Procédé et appareil pour l'imprégnation de faisceau de fibres continu

(30) Priority: 14.07.1989 FI 893438
(43) Date of publication of application: 06.03.1991
(73) Proprietor: NESTE OY, SF-02150 Espoo 15 (FI)
(72) Inventor: Marttila, Pauli, SF-00800 Helsinki (FI)
(74) Representative: Ruffles, Graham Keith

(56) References cited:
- AT-B- 242 937
- AT-B- 351 756
- CH-A- 384 196
- CH-A- 575 819
- DE-A- 1 460 317
- DE-A- 1 704 621
- DE-A- 3 210 120

## Description

The present invention concerns a process and apparatus for impregnating a continuous fibre bundle. The process and apparatus of the invention are appropriate for impregnating fibre bundles with molten or fluid resin in the course of manufacturing fibre-reinforced materials which consist of a reinforced fibre bundle or fibre bundles bound with a thermoplastic resin material which forms a matrix.

The greatest problem related to manufacturing said products is the high viscosity of certain materials included in the matrix resin. Since individual fibres in fibre bundles lie very close to one another, it is difficult to make the resin material penetrate into a resin bundle and to surround all individual fibres. This would, however, be indispensable considering the properties of the product, such as strength, rigidity, chemical durability, further processability, etc.

Endeavours have been made to develop a number of solutions to the problem. In one method, fibre bundles are conveyed through a so-called crosshead-die, in which melt or liquid resin is made to enter into fibre bundles travelling through the nozzle chamber at elevated pressure. The crosshead-die procedure has proved inefficient in impregnating fibre bundles with thermoplastic resins because not all individual fibres get encircled with resin although during the impregnation phase the fibres are kept at elevated pressure. In impregnating reinforcing fibres, the range of viscosity of resin 1 to 10 PaS would be ideal, the common order of magnitude being 10² PaS, and in some cases, the order of magnitude 10³ PaS is acceptable. However, a typical range of viscosity for molten thermoplastic resins is 10² to 10⁶ PaS order of magnitude; it is thus obvious that with said crosshead-die procedure encircling all individual fibres with resin is not successful.

The present invention discloses a process and apparatus for impregnating a continuing fibre bundle or fibre bundles with molten or fluid curing resin so that even individual fibres are encircled with resin. The process of the invention for impregnating a continuous fibre bundle or fibre bundles with molten thermoplastic or curing resin in the course of manufacturing fibre-reinforced material, said material comprising one or more fibre bundles absorbed with matrix resin, is characterized in that said fibre bundles are so guided to pass across a nozzle aperture that molten resin flows from the nozzle from elevated pressure transversely through the fibre bundle to lower pressure.

In the simplest embodiment of the process of the invention, a fibre bundle or fibre bundles to be impregnated is/are guided to pass across the aperture of a nozzle head, from which molten resin at elevated pressure runs out. The nozzle may be connected eg to an extruder in which melting and processing of the plastic is carried out, or to a tank in which the ingredients of thermosetting resin are mixed. The fibre bundle to be impregnated may hereby be at atmospheric pressure or, if desired, at a lower pressure.

According to one embodiment of the process of the invention, the nozzle head is located in a chamber which contains molten resin, through which the fibre bundles to be impregnated flow. A lower pressure is then prevalent in the chamber than in the nozzle through which the molten thermoplastic resin flows out.

By the process of the invention any fibre-reinforced material can be produced in which the fibres lie in the form of bundles. The fibres may be any such fibres that can be bound to matrix resin. Such products are, for instance, long-fibre reinforced granulates for injection moulding and other processes, pre-cured or pre-absorbed materials for conventional processes, such as pultrusion, filament rolling, tape lamination, etc. The product to be produced in the process is a continuous tape which can be used for pultrusion, etc. When cut to appropriate lenth, the product forms long-fibre granulates of about 3 to 20mm length.

Thus, in the process of the invention, fibres, such as fibreglass, carbon fibres and aramide fibres, and thermoplastic fibres can be used. Among the most common reinforced fibres are fibreglass products in the form of bundles which products can be used individually or combined into bundles, or also in woven, braided or otherwise worked shapes. Fibreglass bundles typically contain thousands of individual fibres, usually with diameter of about 10 to 17µm.

The resin material used for binding reinforced fibres of fibre-reinforced material may be, for instance thermoplastic resin, which is impregnated into bundles in molten state, or thermosetting resin, which after being absorbed is set with external energy, such as heat, chemical reaction, UV radiation, magnetic field, radiation, etc.

Suitable thermoplastic resins are, for instance homopolymers and copolymers of olefins, homopolymers and copolymers of vinyl chloride, polyethylene terephtalate, homopolymers and copolymers of acrylonitrile, polyamides and copolyamides, thermoplastic polymers of formaldehyde, polycarbonate, polysulphone, and mixtures of any two or several above-mentioned polymers.

The invention also concerns apparatus for impregnating a continuous fibre bundle or fibre bundles with molten or fluid curing resin so that even individual fibres become encircled with resin. The apparatus of the invention for impregnating a continuous fibre bundle or fibre bundles with molten or fluid curing resin in manufacturing fibre-reinforced material, said material comprising one or several fibre bundles encircled by matrix resin, is characterized in that it comprises one or more nozzle members with a nozzle aperture for conducting molten thermoplastic or thermosetting resin from a higher pressure to a lower pressure, and members for conducting said fibre bundles across the nozzle aperture so that the resin, which is at higher pressure, running from the nozzle aperture runs through the fibre bundles to a lower pressure.

According to one embodiment of the apparatus of the invention, it comprises an impregnation chamber in which the absorption takes place and the pressure prevailing wherein is lower than the pressure prevailing in the nozzle.

According to another embodiment of the apparatus of the invention, the fibre bundles are taken through the chamber across the nozzle aperture/apertures of one or several nozzle members. A so-called crosshead-die method may herewith be applied in such manner that the absorption chamber is not directly connected eg with an extruder producing a required impregnation pressure. Instead, molten resin runs from a higher pressure into the nozzle chamber in which a lower pressure is prevalent and from which extra resin may freely run out, and it can be returned to the feed side of the extruder. Hereby, a double impregnation influence is provided because the fibre bundle to be impregnated flows through the molten resin present in the chamber, and at the same time, it crosses the nozzle aperture wherefrom molten, pressurized resin runs directly through the fibre bundle.

According to an embodiment of the apparatus of the invention, the impregnation chamber may in addition contain such members which reshape the fibre bundle to be impregnated, for instance by flattening and widening the fibre bundle track, which facilitates the discharging of resin through the fibre bundles. The forming members may be eg rod-like members, their direction being either horizontal or transversal, or oblique relative to the fibre bundle to be absorbed.

The invention is described furthermore, though not being confined, by referring to the figures enclosed, in which
Figure 1 presents schematically a simple embodiment of the means of the invention,
Figure 2 presents two nozzle members which are located on different sides of the fibre bundle to be absorbed, and
Figure 3 presents the impregnation apparatus of the invention containing an impregnation chamber.

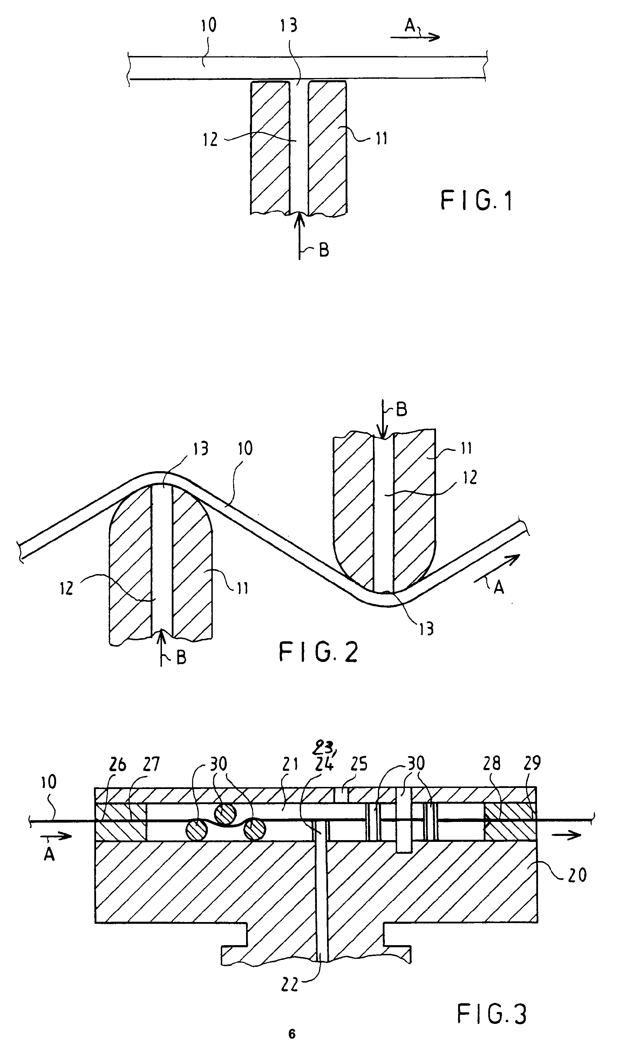

In Figure 1 a fibre bundle or fibre bundles 10 passes/pass in the direction marked with arrow A across the nozzle aperture 13 of a nozzle 11. A nozzle duct 12 runs through the nozzle 11, wherethrough molten thermoplastic resin runs (arrow B) from a higher pressure, for instance, through an extruder (not shown). The molten resin is then forced to discharge through the nozzle aperture 13 through a mat of fibre bundles 10, whereby the fibres become encircled with molten resin. The impregnated fibre bundle mat may thereafter be moulded and cured in methods known in themselves in the art (not shown).

Figure 2 presents two nozzles 11 placed on different sides to the fibre bundle mat 10. Hereby, through the fibre bundle mat 10 molten resin flows twice, but the flow directions of the resin (arrows B) are opposite, thus intensifying the impregnation.

In Figure 3 is shown impregnation apparatus 20 which contains an impregnation chamber 21. A nozzle duct 22 leads into the impregnation chamber, said duct being connected for instance with an extruder (not shown). The nozzle duct 22 terminates in the impregnation chamber 21 to the nozzle 23 through the nozzle aperture 24. In the chamber 21 is moreover located an outlet aperture through which excessive molten resin is conducted out of the chamber 21, and it may be returned to the extruder. The fibre bundle mat 10 to be impregnated is conducted into the chamber 21 through the inlet aperture 26 and the inlet duct 27, which is narrow enough to prevent the molten resin from running out of the chamber 21 therethrough. The impregnated fibre bundle mat exits from the impregnation chamber 21 through the outlet duct 28 and the outlet aperture 29.

Since in the apparatus of Figure 3 an outlet aperture 25 has been provided in the impregnation chamber 21, which is in connection with the air outside, or in any case, with a lower pressure, discharging of the molten resin from a higher pressure (from the duct 22) through the fibre bundle mat 10 (chamber 21) is herewith produced. It goes without saying that one (23) or several nozzles 24 may be provided and they may be located on one side or on different sides to the fibre bundle track 10. In addition, one or several guiding members, such as rods 30, may be advantageously arranged in the chamber 21, by the aid of which the fibre bundle mat to be impregnated may be guided and reshaped prior to an impregnation point or thereafter.

In addition, pretreatment of the resin to be impregnated may be applied in the process and apparatus of the invention to reduce its viscosity. If an apparatus such as shown in Figure 3 is employed, it is also feasible to conduct into the chamber 21 a different kind of resin than the one conducted through the nozzle 24, or also other agent for the treatment, such as a moistening agent, etc.

## Claims

1. A process for impregnating a continuous fibre bundle or fibre bundles (10) with molten or fluid curing resin in course of manufacturing fibre-reinforced material, said material comprising one or several fibre bundles (10) encircled by matrix resin, characterized in that said fibre bundles (10) are conducted to pass across a nozzle aperture (13,24) so that the resin runs from the nozzle (11,23) from a higher pressure to a lower pressure transversely through the fibre bundle (10).

2. A process according to Claim 1, characterized in that the molten resin discharges from the nozzle (11,23) into the atmospheric pressure or to a lower pressure.

3. A process according to Claims 1 or 2, characterized in that the molten resin discharges from the nozzle (11,23) into molten resin which is at a lower pressure.

4. A process according to Claim 3, characterized in that said resin at lower pressure is located in a chamber (21) through which the molten resin at lower pressure and that fibre bundles (10) are conducted.

5. A process according to any one of the preceding claims, characterized in that the higher pressure is produced in an extruder.

6. Apparatus for impregnating a continuous fibre bundle or fibre bundles (10) with molten or fluid curing resin in the course of manufacturing fibre-reinforced material, said material comprising one or several fibre bundles (10) encircled by matrix resin, characterized in that it comprises one or several nozzle members (23) with a nozzle aperture (24) for conducting resin from higher pressure to lower pressure, and members for conducting said fibre bundles (10) across said nozzle aperture (24) so that the resin running from the nozzle aperture (24) at the higher pressure runs transversely through fibre bundles (10) to a lower pressure.

7. Apparatus according to Claim 6, characterized in that it contains an impregnation chamber (21) in which the impregnation takes place and the pressure prevailing in which is lower than the pressure prevailing in the nozzle (23).

8. Apparatus according to Claim 7, characterized in that the fibre bundles (10) to be impregnated are conductable through the chamber (21) across the nozzle aperture (24) of one or several nozzle members (23) placed in the chamber (21).

9. Apparatus according to Claims 7 or 8, characterized in that the nozzle members (23) have been connected to an extruder and that excessive molten resin is returnable to the extruder.

## Patentansprüche

1. Verfahren zum Imprägnieren eines Endlos-Faserbündels oder von Faserbündeln (10) mittels geschmolzenem oder flüssigem Reaktionsharz während der Herstellung von faserverstärktem Material, wobei das genannte Material ein oder mehrere Faserbündel (10) umfaßt, die vom Matrixharz umschlossen sind, dadurch gekennzeichnet, daß die genannten Faserbündel (10) so an einer Düsenöffnung (13, 24) vorbeigeführt werden, daß das Harz aus der Düse (11, 23) von einem höheren Druck quer durch das Faserbündel (10) zu einem niedrigeren Druck hin fließt.

2. Verfahren nach Anspruch 1, dadurch gekennzeichnet, daß das geschmolzene Harz aus der Düse (11, 23) zum Atmosphärendruck oder zu einem niedrigeren Druck hin austritt.

3. Verfahren nach den Ansprüchen 1 oder 2, dadurch gekennzeichnet, daß das geschmolzene Harz aus der Düse (11, 23) in geschmolzenes Harz austritt, das unter niedrigerem Druck steht.

4. Verfahren nach Anspruch 3, dadurch gekennzeichnet,, daß sich das genannte Harz bei niedrigerem Druck, in einer Kammer (21) befindet, durch die das geschmolzene Harz bei niedrigerem Druck und die Faserbündel (10) geführt werden.

5. Verfahren nach einem der vorstehenden Ansprüche, dadurch gekennzeichnet, daß der höhere Druck in einem Extruder erzeugt wird.

6. Vorrichtung zum Imprägnieren eines Endlos-Faserbündels oder von Faserbündel, (10) mittels geschmolzenem oder flüssigem Reaktionsharz während der Herstellung von faserverstärktem Material, wobei das genannte Material ein oder mehrere vom Matrixharz eingeschlossene Faserbündel (10) umfaßt, dadurch gekennzeichnet, daß er ein oder mehrere Düsenelemente (23) mit einer Düsenöffnung (24), um so Harz von einem höheren Druck zu einem niedrigeren Druck hin zu führen, sowie Elemente umfaßt, um die genannten Faserbündel (10) so an der genannten Düsenöffnung (24) vorbeizuführen, daß der bei höherem Druck aus der Düsenöffnung (24) austretende Harz quer durch die Faserbündel (10) zu einem niedrigeren Druck hin fließt.

7. Vorrichtung nach Anspruch 6, dadurch gekennzeichnet, daß er eine Imprägnierkammer (21) umfaßt, in der die Imprägnierung erfolgt, wobei der darin anliegende Druck niedriger als derjenige in der Düse (23) ist.

8. Vorrichtung nach Anspruch 7, dadurch gekennzeichnet, daß die zu imprägnierenden Faserbündel (10) durch die Kammer (21) an der Düsenöffnung (24) in einem oder mehreren Düsenelementen (23), die in der Kammer (21) angeordnet sind, vorbeigeführt werden können.

9. Vorrichtung nach den Ansprüchen 7 oder 8, dadurch gekennzeichnet, daß die Düsenelemente (23) mit einem Extruder verbunden sind, und daß überschüssiges geschmolzenes Harz zum Extruder zurückgeführt werden kann.

## Revendications

1. Procédé pour l'imprégnation d'un ou de plusieurs faisceaux de fibres continus (10) d'une résine de durcissement fluide ou en fusion au cours de la fabrication de matériau renforcé par fibres, le matériau comprenant un ou plusieurs faisceaux de fibres (10) entourés d'une résine matricielle, caractérisé en ce que les faisceaux de fibres (10) sont amenés pour traverser une ouverture de tuyère (13, 24) de façon que la résine s'écoulant de la tuyère (11, 23) à partir d'un niveau de pression supérieure passe à une pression inférieure transversalement à travers le faisceau de fibres (10).

2. Procédé selon la revendication 1, caractérisé en ce que la résine en fusion est évacuée par la tuyère (11, 23) à la pression atmosphérique ou à une pression inférieure.

3. Procédé selon la revendication 1 ou 2, caractérisé en ce que la résine en fusion est évacuée de la tuyère (11, 23) en résine en fusion qui est à une pression inférieure.

4. Procédé selon la revendication 3, caractérisé en ce que la résine à pression inférieure est située dans une chambre (21) à travers laquelle la résine en fusion est à pression inférieure et des faisceaux de fibres (10) sont amenés.

5. Procédé selon l'une quelconque des revendications précédentes, caractérisé en ce que la pression supérieure est produite dans une extrudeuse.

6. Appareil pour l'imprégnation d'un faisceau ou de plusieurs faisceaux de fibres continus (10) d'une résine de durcissement fluide ou en fusion au cours de la fabrication du matériau renforcé par fibres, le matériau comprenant un ou plusieurs faisceaux de fibres (10) entourés de résine matricielle, caractérisé en ce qu'il comprend un ou plusieurs éléments de tuyère (23) avec une ouverture de tuyère (24) destinée à guider la résine depuis une pression élevée à une pression moins élevée, et des éléments destinés à guider les faisceaux de fibres (10) à travers l'ouverture de tuyère (24) de façon que la résine passant de l'ouverture de tuyère (24) à la pression supérieure s'écoule transversalement à travers les faisceaux de fibres (10) à une pression inférieure.

7. Appareil selon la revendication 6, caractérisé en ce qu'il contient une chambre d'imprégnation (21) dans laquelle s'effectue l'imprégnation et la pression régnant dans celle-ci étant inférieure à la pression régnant dans la tuyère (23).

8. Appareil selon la revendication 7, caractérisé en ce que les faisceaux de fibres (10) à imprégner peuvent être amenés à travers la chambre (21) à travers l'ouverture de tuyère (24) d'un ou plusieurs éléments de tuyère (23) placés dans la chambre (21).

9. Appareil selon la revendication 7 ou 8, caractérisé en ce que les éléments de tuyère (23) ont été raccordés à une extrudeuse et en ce que la résine en fusion excessive peut être renvoyée à l'extrudeuse.
